# NEW EUROPEAN PATENT SPECIFICATION

(11) **EP 1 486 317 B2**
(45) Date of publication and mention of the opposition decision: **22.04.2020**
(45) Mention of the grant of the patent: 13.08.2008
(21) Application number: 04013326.6
(22) Date of filing: 05.06.2004
(51) Int. Cl.: B29C 67/00, B22F 3/105

(54) **Optimal dimensional and mechanical properties of laser sintered hardware by thermal analysis and parameter optimization**
Optimale mechanische und dimensionale Eigenschaften eines Teiles hergestellt durch Lasersintern durch thermische Analyse und Parameteroptimierung
Propriétés mecaniques et dimensionelles optimales d'un objet produit par frittage laser à travers l'analyse thermique et l'optimisation des paramètres

(30) Priority: 10.06.2003 US 458636
(43) Date of publication of application: 15.12.2004
(73) Proprietor: Aerojet Rocketdyne of DE, Inc., Canoga Park, CA 91309 (US)
(72) Inventor: Fink, Jeffrey E., 91307 West Hills (US); Taylor, Tracy L., 93065-1910 Simi Valley (US); Wegner, Lori A., 90403 Santa Monica (US); Shapey, Bryon, 91362 Thousand Oaks (US)
(74) Representative: Dehns

(56) References cited:
- WO-A1-01/81031
- DE-C1- 19 947 576
- US-A- 5 659 478
- KG COOPER: "Rapid Prototyping Technology" 2001, DEKKER , NEW YORK , XP002295437 * page 3 - page 11 *
- Mathey: "Workshop EOSINT P, Overhead sheets 'Hearing Aid Shells- Process control and Optimization'", EOS International User Meeting, 21-23 Mia 2003,
- "Kunststoffe- Bestimmung der Biegeeigenschaften (ISO 178)", DIN EN ISO 178,
- "Kunststoffe- Bestimmung der Zugeigenschaften", DIN EN ISO 572-1 und 527-2,
- "Plastics- Methods for determining the density of non-cellular plastics", DIN EN ISO 1183-1,
- I. Gibson: "Software solutions for Rapid Prototyping", 2002, Cromwell Press Ltd, Witshire pages 57-75,
- Beamen et al: "A new Direction in Manufacturing", 1997, Kluwer, Dordrecht pages 226-243,
- Nelson et al: "Improvements in SLS Part Accuracy", SFF Proceedings, September 1995 (1995-09), pages 159-169,
- Copy of manual delivered to Nolato Mobile of an EOS M 250 Xtended, Stand, August 1999
- Letter of Firm EOS GmbH to Firma Nolato Mobile AB, Kristianstad, Sweden, dated 13 Juni 2000
- Sales contract between Nolato Mobile AB, Sweden and EOS Electro Optical Systems, dated 30 May 2000
- Extracts of website http://lorien.ncl.ac.uk/ming/dept/swot/con notes.htm
- AD 2000 Merkblatt HP 5/2, 2007,
- Reference in D14 to version of 1989
- Norm EN 1418 von 1998
- Santos, E.: "Mechanical Properties of Pure Titanium Models Processed by Selective Laser Melting", 13th Solid Freeform Fabrication Proceedings, 2002, pages 180-186,
- Subramanian, K. et al: "Selective laser sintering of alumina with polymer binders", Rapid Prototyping Journal, 1995, pages 24-35,
- Hauser, C.: "Selective Laser Sintering of Stainless Steel 314S HC processed using room temperature powder beds", 10 th Solid Freeform Fabrication Proceedings, 1999, pages 273-280,
- Wagner, C.: "Untersuchungen zum selektiven Lasersintern von Metallen", Dissertation, 16 December 2002 (2002-12-16),
- Gebhardt, Andreas: "Rapid Prototyping: Werkzeuge für die schnelle Produktenthehung", pages 206-207,

## Description

### FIELD OF THE INVENTION

The present invention relates generally to rapid prototype machines and more particularly to optimization of build runs using a selective laser sintering machine or the like.

More particularly, the invention relates to a method for improving production parts, in particular aerospace production parts, produced from a rapid prototyping machine, wherein the rapid prototyping machine makes use of a rapid prototyping material, a set of input data and an information set having information pertaining to manufacturing factors involved in a previous build run of a production part, the method comprising:

executing a build run that produces output components,

comparing said output components to said set of input data to produce a resultant data set, said resultant data set including deviations between said set of input data and said output components,

incorporating said resultant data set into said information set, and

tailoring said information set to reduce said deviations between said set of input data and said output components as compared to at least one previous build run.

Such a method is known, for instance, from KG Cooper, "Rapid Prototyping Technology", 2001, Dekker, New York, pages 3 to 11.

### BACKGROUND OF THE INVENTION

Methods of rapid prototyping, such as selective laser sintering (SLS), are well known in the art and have traditionally been employed to produce parts known as "rapid prototypes," which are parts that are used to demonstrate a proof of concept or a requirement such as proper form and fit. The selective laser sintering process generally consists of producing parts in layers from a laser-fusible powder that is provided one layer at a time. The powder is fused, or sintered, by the application of laser energy that is directed to portions of the powder corresponding to the cross-section of the part. After sintering the powder in each layer, a successive layer of powder is applied and the process of sintering portions of the powder corresponding to the cross-section of the part is rewith sintered portions of successive layers fusing to sintered portions of previous layers until the part is complete. Accordingly, selective laser sintering is capable of producing parts having relatively complex geometry with relatively acceptable dimensional accuracy and using a variety of materials such as wax, plastics, metals, and ceramics.

Generally, SLS parts are produced directly from an engineering master definition in CAD (computer aided design) models. Thus, the time required to produce a rapid prototype is significantly shorter than with conventional methods such as sheet metal forming, machining, molding, or other methods known in the art. Further, powder materials that are presently used for selective laser sintering generally have relatively low mechanical properties due to the nature of the rapid prototype application. Accordingly, parts formed using selective laser sintering are typically not used within a production design or as production parts due to limited performance capabilities such as low or inconsistent mechanical properties.

Aerospace parts have relatively stringent design requirements compared with parts in other applications, primarily due to operating environments having extremely high loads and temperatures in addition to a relatively high amount of parts in a relatively small volume. For example, aerospace parts are commonly subjected to fluid exposure, pressure cycling, prolonged fatigue loads, buffeting, and a wide range of temperatures in operation, among others, and must further be as light weight as possible to meet performance objectives. Additionally, aerospace parts such as ECS (environmental control system) ducts typically define relatively intricate shapes in order to route around other parts and aircraft systems within an aircraft. Moreover, aerospace structures must be capable of withstanding impact loads from maintenance, handling, and in the case of military aerospace structures, from threats such as armor piercing incendiaries or high explosive incendiaries. Accordingly, aerospace parts must be designed to accommodate a variety of operating environments and thus have design requirements that are beyond those of non-aerospace parts.

The aerospace industry is constantly searching for ways to shorten the cycle time from conception to production. Any savings realized in cost or time along the cycle time line represents significant savings for the industry. To that end, there has been tremendous research in the areas of optimizing part inventories, optimizing accessibility to those part inventories, and optimizing response time to the demand for the parts. More specifically, having a very large volume of parts available at the point of assembly allows the mechanic to have any and all parts at their disposal. The inventory required, however, is extremely expensive and storing, cataloging and quickly retrieving parts presents myriad difficulties and significant cost. On the other hand, having only exactly what parts are needed at the point at which the demand exists may be ideal, but implementation difficulties and large scale integration concerns make this generally impossible. The aerospace industry, therefore, seeks to balance these competing interests in having parts always available but not expending tremendous cost to maintain vast inventories and the infrastructure to support it.

In view of this background, it is an object of the present invention to provide for a method of the kind mentioned before, which method produces production parts far superior to parts produced from prior rapid prototyping machines and processes.

According to one aspect of the invention, this object is achieved by a method as mentioned at the outset, wherein the output components include a combination of at least one production part and at least one iterative improvement specimen, wherein said iterative improvement specimens include one of Z-tensile arrays, density cubes, dimensional pyramids, flexural samples, and combinations thereof.

In general, the present invention is related to a method for improving production parts produced from a rapid prototyping machine. The method generally comprises several steps. First, a suitable rapid prototyping machine is provided with a suitable rapid prototyping material. The rapid prototyping machine further includes a set of input data and an information set. The input data includes desired dimensions and desired material characteristics. The information set may include a thermal analysis of a parts bed and fabricated parts, material characteristics of the rapid prototyping material, and/or build parameters, all of which are from previous build runs, known values, and/or computed values. A second step involves generating a build run that produces output components having production parts and iterative improvement specimens. Third, a comparison is made of the output production parts and iterative improvement specimens to the set of input data. This comparison produces a resultant data set that includes deviations between the input data and the output components. Fourth, the information set is tailored to reduce deviations between the input data and the output components as compared to previous build runs.

Further areas of applicability of the present invention will become apparent from the detailed description provided hereinafter. It should be understood that the detailed description and specific examples are intended for purposes of illustration only and are not intended to limit the scope of the invention.

### BRIEF DESCRIPTION OF THE DRAWINGS

The present invention will become more fully understood from the detailed description, the appended claims, and the accompanying drawings, wherein:

Figure 1 is a flow diagram illustrating a selective laser sintering process in accordance with the teachings of the present invention;

Figure 2 is a diagram of a part bed configuration in accordance with the teachings of the present invention;

Figure 3 is a flow diagram illustrating the optimization process in accordance with the teachings of the present invention;

Figure 4a a simplified representation of a selective laser sintering process during an exemplary build run;

Figure 4b a simplified representation of a selective laser sintering process during an exemplary build run;

Figure 4c a simplified representation of a selective laser sintering process during an exemplary build run;

Figure 5 is a perspective view of a typical part bed showing production parts and iterative improvement specimens in accordance with the teachings of the present invention; and

Figure 6 is a perspective view of an exemplary parts bed of a rapid prototyping machine showing the Z-Tensile arrays in accordance with teachings of a preferred alternative implementation of the present invention.

### DETAILED DESCRIPTION OF THE PREFERRED IMPLEMENTATIONS

The following description of the preferred implementations is merely exemplary in nature and is in no way intended to limit the invention, its application, or uses. Additionally, the selective laser sintering process as well as other rapid prototyping processes are well known by those skilled in the art and will therefore not be described herein in extensive detail.

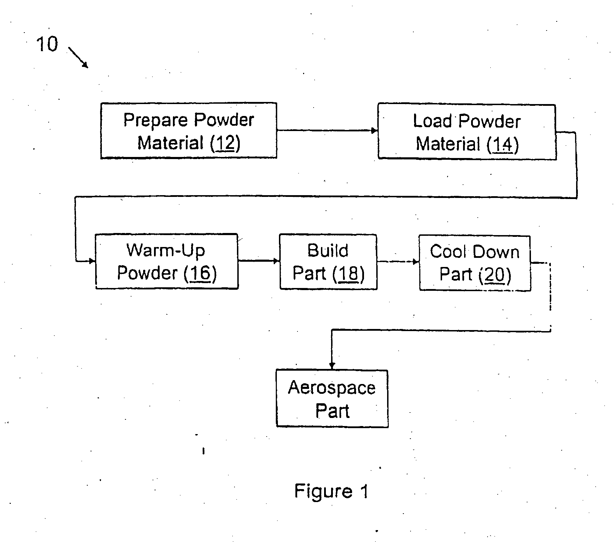

Referring to Figure 1, a process of fabricating at least one aerospace part according to the present invention is represented in a flow diagram format as indicated by reference numeral 10. As shown, the process generally comprises a step 12 of preparing a powder material, loading the powder material, per step 14, into a laser sintering machine, warming up the powder material at step 16, building the part at step 18, and cooling down the part at step 20. Additionally, the process 10 includes several build and part parameters, which are characterized as either "hidden," "fixed," or "variable." The hidden and fixed parameters are generally provided by the equipment manufacturer and are also a part of the operating software for the laser sintering machine. Preferably, a 2500 Plus Sintering Machine from 3D Systems® Valencia, CA, is used to fabricate parts in accordance with the present invention. The hidden and fixed variables are discussed in greater detail along with more specifics of a Laser Sintering Machine in copending commonly assigned United States Patent Application US 2004/0021256 A1, Serial Number 10/205,451.

The variable parameters, some of which are outlined in Table 1, have been developed through extensive research and testing by the inventors in order to produce parts that are capable of direct application in aerospace structures and systems. The variable parameters that have been developed according to the present invention and that are applicable to the process phases of the present invention are listed below in Table 1 for each of the process phases. The variables are applicable to both an individual part or the parts fabricated from a nested part build (i.e., more than one part).

Moreover, the variables as outlined in Table 1 are not an exhaustive list of variables that contribute to the parameter optimization of the present invention. As such, variables may be created, deleted, or modified to accomplish a needed end if the optimization demands it. In addition to variables shown in Table 1, the present invention includes outline laser power, outline laser offset X, outline laser offset Y. The outline laser or beam, in general, is used to draw the perimeter of a scanned layer to improve the surface finish of the part. As such, the outline variable and outline function is configured to articulate the laser beam to follow the outline of the part layer. The fill laser or fill beam, unlike the outline laser, rasters or fires back and forth to fill the part and not along the outline. Offset of the laser includes calibrating the exact location of the laser in the X or Y dimension along the periphery of the part.

**Table 1**

| Variable Build and Part Sintering Parameters | | | |
|---|---|---|---|
| BUILD PARAMETER | WARM-UP | BUILD | COOL-DOWN |
| Stage Height | 0.500 to 0.855 inch (12.7 to 21.72 mm) | N/A | 0.015 - 0.200 inch (0.381 to 5.08 mm) |
| Left Feed Distance | 0.01 inch (0.254 mm) | 0.01 inch (0.254 mm) | 0.01 inch (0.254 mm) |
| Left Feed Heater Set Point | 100° C - 140° C (212° F - 284° F) | 100° C - 140° C (212° F - 284° F) | 100° C - 140° C (212° F - 284° F) |
| Minimum Layer Time | 30 sec. | 20 - 30 sec. | 10 sec. |
| Part Heater Set Point | T_{glaze}-2° to T_{glaze}-4° C (T_{glaze}-3.6° to T_{glaze}-7.2°F ) | T_{glaze}-2° to T_{glaze}-4° C (T_{glaze}-3.6° to T_{glaze}-7.2°F ) | T_{glaze}-2° to T_{glaze}-4° C (T_{glaze}-3.6° to T_{glaze}-7.2°F ) |
| Part Heater Inner/Outer Ratio | 0.70 - 1.0 | 0.70 - 1.0 | 0.70 - 1.0 |
| Right Feed Distance | 0.01 inch (0.254 mm) | 0.01 inch (0.254 mm) | 0.01 inch (0.254 mm) |
| Right Feed Heater Set Point | 100° C - 140° (212° F - 284° F) | 100° C - 140° (212° F - 284° F) | 100° C - 140° (212° F - 284° F) |
| Fill Beam Offset X | N/A | - 0.005 to 0.01 inch (-0.127 to 0.254 mm) | N/A |
| Fill Beam Offset Y | N/A | - 0.005 to 0.01 inch (-0.127 to 0.254 mm) | N/A |
| Fill Laser Power | N/A | 15 - 20 Watts | N/A |
| Sorted Fill Max Jump | N/A | 0.25 - 0.5 inch (6.35 - 12.70 mm) | N/A |

Preferably, the powder material used to fabricate parts according to the present invention is a Nylon 11 material that contains no additives or fillers. Aerospace parts fabricated from such a Nylon material are capable of operating within a temperature range of approximately -65° F to approximately 215° F (about -53.9° C to about 101.7° C). One skilled in the art will readily appreciate that many other materials can be used in the selective laser sintering process and other rapid prototype processes. Other such candidate materials include, but are not limited to, metal powders, plastic powders, metal and plastic powder mixtures and ceramic and plastic powder mixtures.

### The Selective Laser Sintering Process

As previously set forth, the process of fabricating at least one aerospace part generally includes preparing the powder material, loading the powder material into a laser sintering machine, inputting the build parameters and nesting arrangement into the machine software, warming up the powder material (warm-up phase), building the part (build phase), cooling down the part (cool-down phase) and breaking parts out from part bed. Prior to preparing the powder material, thermal characterization tests of the sintering bed are preferably conducted to characterize temperature uniformity over the surface of the sintering bed. One such thermal characterization test is a thermal profile test, wherein an aluminum plate with a plurality of thermocouples is placed in a sintering or part bed along with feed heaters that are operating at a set-point of 100° C or greater. Temperatures are thus monitored and recorded from a plurality of locations on the aluminum plate.

In the preferred implementations of the present invention, the temperature gradients should preferably not differ by more than about 4 degrees Celsius (about 7.2 degrees Fahrenheit) variation across the part bed. In a preferred alternative process of the present invention, the aluminum plate is substituted with a plate made of a sinterable material also containing the plurality of thermocouples. With the plate made of the same sinterable material, the same thermal profile test is performed.

A second thermal characterization test is a thermal opacity test, (sometimes referred to as a thermpat test), wherein an approximate 0.05 inch (0.13 cm) thick layer of the sinterable material is sintered over the entire surface of the part bed. The thermal opacity test thus provides an indication of any localized areas that are relatively warmer than surrounding areas by viewing the opacity of the sintered layer. Accordingly, both the thermal profile test and the thermal opacity test are conducted for each possible sintering machine that is used to fabricate aerospace parts.

### Warm-Up Phase

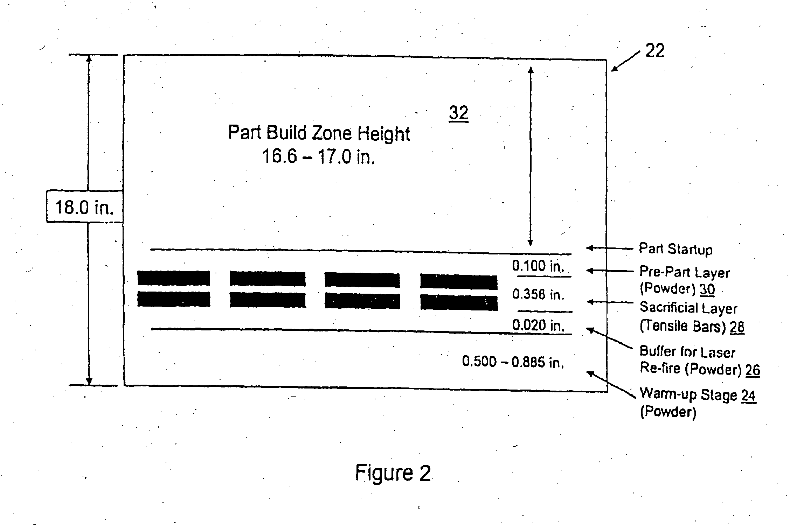

Referring now to Figure 2, a preferred layout for a part bed 22 is illustrated. According to the process of the present invention, layers of powder are first applied by a roller to create a warm-up stage 24, which comprises approximately 0.500 inch to approximately 0.885 inch (approximately 12.7 mm to approximately 22.48 mm) of powder. Further, temperatures are ramped up until a warm-up temperature is reached and endpoint temperatures in the feed heaters and the part bed 22 are set to starting temperatures of the build phase.

### Build Phase

The first step in the build phase is a laser re-fire sequence, during which glazing of the entire surface of the sintering bed occurs and a buffer layer 26 for laser re-fire is created. Generally, the purpose of the buffer layer 26 is to provide a buffer to prevent the re-fire laser from fusing to a subsequent layer of sacrificial tensile bars 28, which are formed after the buffer layer 26. The tensile bars, which are fabricated in accordance with ASTM D638 Type I, are tested after part fabrication to verify required physical and mechanical properties of the aerospace parts.

The next step of the build phase is forming a pre-part layer 30 of approximately 0.100 inch (about 2.54 mm). The pre-part layer 30 serves as a buffer before sintering the actual aerospace parts. Next, fabrication of the production parts is conducted within the part build zone 32 according to the hidden, fixed, and variable parameters and the variable parameters as previously set forth.

### Cool-Down Phase

The cool-down phase begins with the deposition of a buffer layer of powder over the part build, which serves as a thermal cap. During the cool-down phase, the nitrogen purge continues to maintain an inert atmosphere in the build chamber at no greater than approximately 0.2% oxygen volume content. Then, the part bed is allowed to cool to about approximately 40° C (about 104°F) to about 45° C (about 113°C), after which time the sintering machine is opened and the part cake (the fabricated part and excess powder material) is removed.

A working zone or build envelope used for building parts may vary considerably, but in one preferred implementation it is about 13.5 inches (about 342.9 mm) long by about 11.5 inches (about 292.9 mm) wide by about 17 inches (about 431.8 mm) high within the parts bed of the present invention. Although, parts may be fabricated beyond the dimensional constraints of the equipment by subsequently using methods such as mechanical fastening or bonding.

### Optimization of Selective Laser Sintering Machine Parameters

With an exemplarily selective laser sintering (SLS) process explained above, optimization of the process will be discussed. The preferred implementation of the present invention optimizes the SLS build parameters to reduce deviations between the resulting dimensions and material characteristics of the production parts and the initial input data. One skilled in the art will readily appreciate that the process by which optimization is performed is readily applicable to any type of rapid prototyping process. Further, the SLS build parameters, for example, can be readily adapted to other SLS machines or other rapid prototyping processes.

The optimization of the build parameters are performed with the goal of reducing deviations between input values and output values. The term "deviation" refers to not just the deviation from a structural dimension, as noted above, but also deviation from desired material characteristics. More specifically, the SLS machine produces production parts with desired input dimensions and desired material characteristics. The SLS machine, however, may not always achieve the desired dimensions and material characteristics, which, in turn, creates a difference or deviation between the input or desired value and an output or resulting value. Optimizing the build parameters greatly increases the performance of the SLS machine by driving the output dimensions and material characteristics to the desired values and ultimately decreases deviations from the same.

In the preferred implementation of the present invention the variables, as outlined in Table 1 above, are adjusted through an optimization routine by evaluating and comparing the following rapid prototyping build information: A Thermal analysis of the part bed, material and mechanical properties, physical and thermal characteristics of the rapid prototyping material, and empirical data from previous build runs. The empirical data from previous build runs is derived from dimensional evaluation of the production parts and iterative improvement specimens produced during a given run. Additional empirical evidence may be derived from, among other things, destructive and other mechanical testing of the iterative improvement specimens.

After the evaluation and comparison of the dimensions and material characteristics between the input or desired value and the output or resultant values, the rapid prototyping build parameters used by the SLS machine are compared to see what parameters and their associated values produce the best results in the production parts and iterative improvement specimens. Through manual manipulation and/or mathematical manipulation and comparison, the build parameters are adjusted based on the above comparisons to reduce deviations in the output from the desired input dimensions and material characteristics. The newly optimized parameters and all other information are categorized and stored and then reapplied on the next rapid prototyping build run.

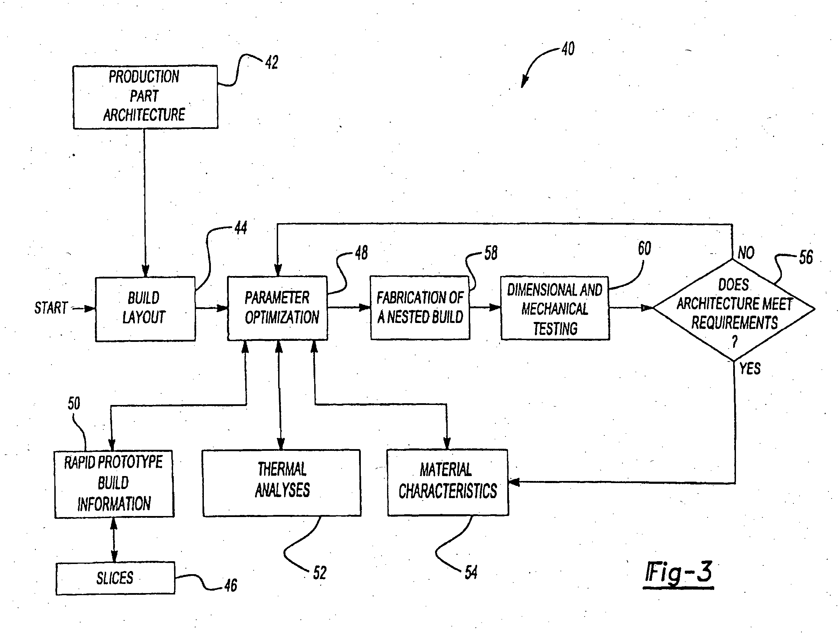

Referring to Figure 3, a process of optimizing production parts according to the present invention is represented in a flow diagram format as indicated by reference numeral 40. As shown, the process generally comprises a step 42 of providing production part architecture, producing the build layout at step 44, producing slices at step 46, and a parameter optimization at step 48. The parameter optimization step 48 incorporates the rapid prototyping build information of step 50, thermal analyses from step 52, and material characteristics obtained from step 54. The rapid prototyping build information of step 50 incorporates the production of slices of step 46. As noted by the double-ended arrows information and processes may pass back and forth between the parameter optimization of step 48, the rapid prototype build information of step 50, the thermal analysis of step 52, the material characteristics of step 54, and the slices of step 46.

After completion of the parameter optimization step 48, the process 40 proceeds to the fabrication of the nested build step 58. After completion of the fabrication of the nested build step 58, the process 40 proceeds to the dimensional and mechanical testing step 60. Upon completion of the dimensional and mechanical testing step 60, the resultant architecture is assessed, per step 56, to determine if the resultant architecture meets the requirements outlined by the user (not shown) as input by the production part architecture step 42. Failure to meet these requirements results in returning back to the parameter optimization step 48, which, in turn, produces a re-optimization of the parameters to achieve the desired architecture. Meeting the architecture requirements allows the process 40 to record the information derived during the build run and from the dimensional and mechanical testing of step 60 as successful run. Whether the architecture meets the stated requirements or not, the rapid prototype build information of step 50, the thermal analysis of step 52, the material characteristics of step 54, and the slices of step 46 are saved and noted as successful or unsuccessful runs to improve the parameter optimization.

The production part architecture step 42 can take many forms such as computer aided drawing (CAD) files, direct user input, or translated architecture from other computer operated software systems such as I-DEAS®, Pro-Engineer®, Auto-CAD@. One skilled in the art will readily appreciate that the production part architecture can take many forms and further be translated from many forms to be used in many rapid prototyping machines. In the preferred implementation of the present invention, the selective laser sintering machine receives architecture in the form of a CAD file in the step 42 of providing production part architecture.

The step 44 of producing the build layout involves a translation from the production part architecture step 42 to a readable format used by the rapid prototyping machine. In a preferred implementation of the present invention a selective laser sintering machine is used, namely the aforementioned 2500 Plus Sintering Machine from the 3D Systems®. To that end, 3D Systems® supplies a software package suitable for use with the 3D Systems® sinter station machine. The software package translates the production part architecture step 42 into a format useful to the sintering machine. One skilled in the art will readily appreciate that use of a different machine would necessitate a different translation of the production part architecture to a format usable to that particular rapid prototyping machine. With that in mind, one skilled in the art may readily substitute other selective laser sintering machines or rapid prototyping machines for use with the present invention; as such, for example, different translation packages supplied by perspective suppliers would be used with the step of producing the build layout 44.

The step 46 of producing slices encompasses a process that performs a layer by layer calculation of feed heights, volume and mass of material required, and laser heat input. In a preferred implementation of the present invention, a selective laser sintering machine is used. A requirement of the sintering process is the formation of a plurality of horizontal cross-sectional slices of the parts being produced by the sintering machine. The step 46 of producing slices thus facilitates fabrication of the nested build at step 58 and the parameter optimization at of step 48, both of which will be discussed in greater detail below.

The step 48 of parameter optimization encompasses an analysis of all the variables and values used in the selective laser sintering process. As such, the rapid prototyping build information 50, thermal analyses 52, and material characteristics 54 are analyzed to produce the improved production parts when compared to previous production runs, irrespective of the success of the previous build runs. Through manual manipulation and/or mathematical manipulation and comparison of the above values, the parameters are adjusted to reduce deviations in output from the desired input dimensions and material characteristics.

The step 48 of the parameter optimization further encompasses creation of scale factor. The scale factor comprises the desired input dimensions from the production part architecture 42 and the optimized parameters 48, which further includes the rapid prototyping build information 50 and material characteristics 54. With this information, a scale factor is produced that when applied serves as a multiplier for the input dimensions from the production part architecture 42. Application of the scale factor ultimately results in an adjustment or scaling of the input dimensions of the production part architecture 42, which, in turn, produces production components with the desired output dimensions. Processes from which the scale factor is derived are discussed in greater detail below. Notwithstanding, the scale factor may be derived from an analysis using the many forms of iterative improvement specimens discussed below or other items, parts, or material fabricated during a build run.

Fabrication of a nested build 58 encompasses a build run of the selective laser sintering machine. In the build run, the sintering machine produces, among other things, production parts and iterative improvement specimens. The iterative improvement specimens are produced along with or "nested" with the production parts and made of the same sinterable material.

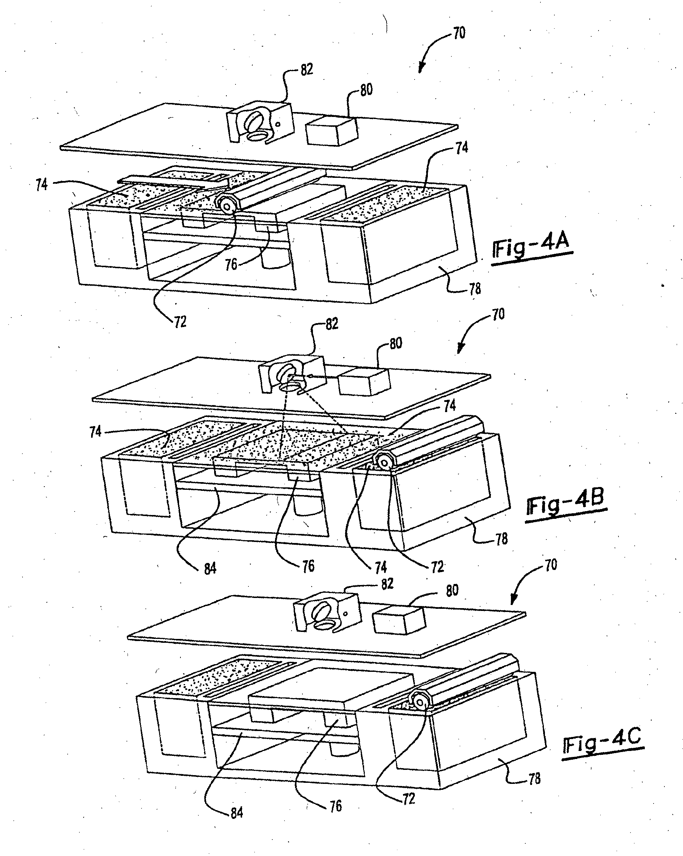

With reference to Figure 4a, 4b, 4c and continuing reference to the flow diagram of Figure 3, a simplified and exemplary sintering process is shown generally represented by reference numeral 70, which provides further detail of the operations (i.e., steps) performed at step 46 of generating slices and fabrication of a nested build 58. In Figure 4a, a powder roller 72 is shown spreading sinterable material 74 over the partially formed production part 76. The step 46 of producing slices in Figure 3 contributes to the regulation of how much sinterable material 74 is applied by limiting the volume and mass distributed by the powder roller 72.

In Figure 4b, the powder roller 72 is now stationary on one side of the sintering machine 78. The laser 80 of the sintering machine 78 fires through a set of optics 82, which directs the laser toward the production part 76. Laser 80 is now directed onto the sinterable material 74, which, in turn, sinters the material and produces the next horizontal cross-sectional layer of the production part 76. Also shown in Figure 4b, the powder roller 72 has spread a new layer of sinterable material 74 over the production part 76 and ultimately over the parts bed 84. After completion of the laser 80 firing on the sinterable material 74, as shown in Figure 4c, a newly sintered solid surface exists on the production part 76.

With the newly sintered horizontal surface on the production part 76, parts bed 84 descends a predetermined distance. The step 46 of producing slices, as shown in Figure 3, regulates the distance that the parts bed 84 descends after each new horizontal cross-sectional layer is sintered on the production part 76. After the parts bed 84 descends, powder roller 72 will once again pass over the production part 76 and the parts bed 84 delivering a predetermined amount of sinterable material 74, thus creating the next new horizontal cross-sectional slice of the production part 76. Repetition of the sintering process 70 results in a plurality of horizontal slices sintered into a complete production part.

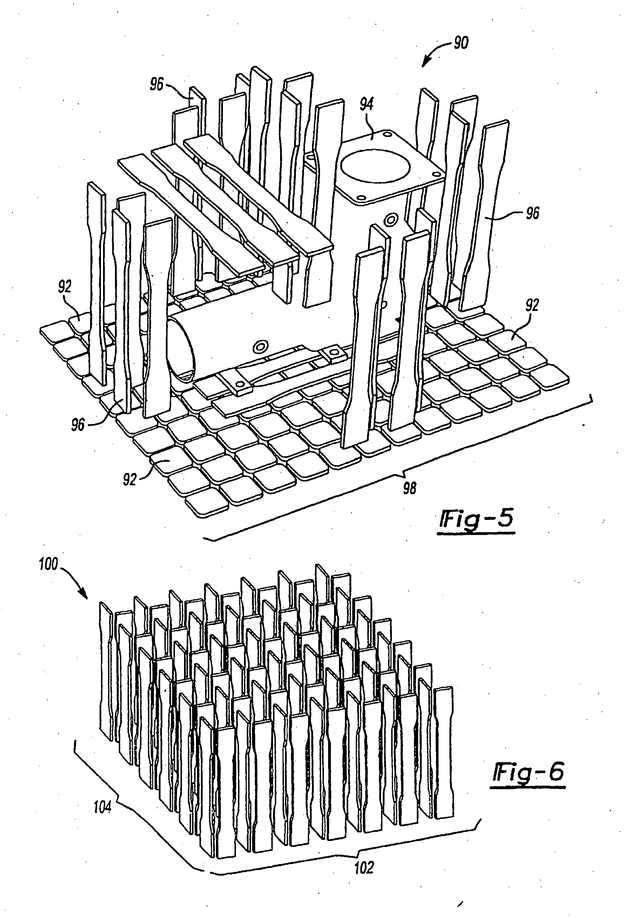

Figures 4a, 4b, and 4c show a simplified and partially completed production part 76. Repetition of the process 70, and first step 58, ultimately produces a nested build, which contains production parts and iterative improvement specimens. An exemplary final result of the step of fabrication of a nested build 58 is shown in Figure 5, where a completed exemplary nested build - including production parts and iterative improvement specimens - are produced in one build run and is generally indicated by reference numeral 90. The exemplary nested build 90 includes a sacrificial layer 92, production parts 94, and iterative improvement specimens 96 all contained in a parts bed 98. All of the components of the exemplary nested part build 90 are composed of the same rapid prototyping material. The sacrificial layer 92 is comprised of tensile bars, which are fabricated in accordance with ASTM D638 Type I, as noted above. The tensile bars are tested after the build run to verify required physical and mechanical properties. Like the tensile bars of the sacrificial layer 92, iterative improvement specimens 96 are constructed in accordance with the present invention in a plurality of locations not otherwise occupied by the production parts 94.

In a preferred implementation of the present invention the iterative improvement specimens 96 are Z-Tensile arrays. Alternatively, in the present invention the iterative improvement specimens 96 may be density cubes, dimensional pyramids, flexural samples, or any such iterative improvement specimen that allows one skilled in the art to measure dimensional, material or mechanical quantities along with performing a qualitative analysis.

The iterative improvement specimens 96 can be fabricated anywhere in the rapid prototyping machine parts bed and in any orientation. The Z-tensile arrays are either flat or cylindrical dumbbell shaped and can be produced in any dimension or location within and among the rapid prototyping machine parts. While the ultimate dimensions of the Z-Tensile array are limited by the size of the parts bed 84, the Z-Tensile array can take any dimension. The step of dimensional and mechanical testing 60 encompasses visual and dimensional inspection of the Z-Tensile array to determine output dimensions. Further, material characteristics derived from mechanical testing and other forms and mechanical manipulation of the Z-Tensile array are also determined per step 60. Results of the above inspection and testing are recorded as material characteristics data at step 54.

In a preferred alternative implementation of the present invention, the Z-Tensile arrays can occupy generally the entire parts bed of a rapid prototyping machine. Referring to Figures 3 and 6, and alternative layout of a parts bed of a rapid prototyping machine is indicated by reference numeral 100. In the layout 100, there exists a parts bed 102 and a plurality of the tensile arrays 104. The plurality of Z-Tensile arrays 104 occupies generally the entire parts bed 102. In this arrangement, fabrication of a nested build 58 produces only a plurality of Z-Tensile arrays 104. Fabrication of only a plurality of Z-Tensile arrays 104 allows for dimensional and mechanical testing 60 to be performed on parts produced from the entire parts bed. Testing of all the parts across the entire parts bed provides a more complete set of data which is, in turn, incorporated into material characteristics at step 54 (Figure 3) and ultimately used in the parameter optimization step 48.

Density cubes, constructed in accordance with a preferred alternative implementation of the present invention, are square, rectangular, or any other suitable simple geometric shaped cubes produced during fabrication of a nested build as described in connection with step 58 (Figure 3). The density cubes are analyzed by a process known to those skilled in the art to determine the density of the density cubes. While no particular dimensions are necessary, the accurate dimensions of the cubes as fabricated are needed to determine the density of the density cubes.

Dimensional pyramids, constructed in accordance with a preferred alternative implementation of the present invention, are pyramid shaped parts that have a staircase or ascending terraces appearance on all four sides. While no particular dimensions are necessary, the accurate dimensions of the dimensional pyramids as fabricated are used to determine performance of the selected rapid prototyping process and the process of optimizing the production parts made in accordance with the process 40.

Flexural samples, constructed in accordance with a preferred alternative implementation of the present invention, are rod shaped parts that have a generally uniform dimension. No particular length or diameter are necessary except where bounded by the dimensions of the parts bed 84, as the flexural specimens are used to, among other things, assess flexibility and elongation. The measured mass and measured ability to elongate the flexural specimens are used to determine performance of the selected rapid prototyping process and the process of optimizing the production parts as set forth in process 40.

It will readily be appreciated that the above exemplary iterative improvement specimens are not an exhaustive list of the possibilities that can be used the present invention. As such, any such item produced along with the production parts in a rapid prototyping machine that can be used to further assess the achievement of desired dimensions and/or material characteristics is well within the scope of the iterative improvement specimens. Further, any such iterative improvement specimens need not be used to the exclusion of another. Any or all of the iterative improvement specimens can be used, or combinations thereof, in a nested build as set forth in step 58 of Figure 3. Furthermore, alternative iterative improvements specimens may be used that mimic part architecture and complexity for certain type of build or part. One such exemplary alternative iterative improvement specimen may be a tube with similar cross-sections to desired parts, wherein the tube may be oriented in the parts bed at a similar three dimensional position and orientation when compared to the certain part

The thermal analysis of the part bed as mentioned above provides a thermal map of the rapid prototyping machine parts bed. A thermal analysis of the parts bed is performed to detect thermal gradients within the parts bed. As stated above, an aluminum plate or plate of sintered material is used outfitted with thermocouples to detect the thermal gradients while the parts bed is warmed. Also stated above, a thermal opacity test may be used.

In a preferred implementation of the present invention the thermal analysis is performed a priori or post mortem. One skilled in the art will readily appreciate that the thermal analysis can be performed prior to the production run, after the production run, or be adapted to be performed during the production run. It will also readily be appreciated that it is practically impossible to achieve a perfectly uniform temperature profile across the parts bed of a rapid prototype machine. With this limitation in mind, the thermal analysis not only provides the machine operator with known hot and cold areas of the parts bed, but actually allows for the optimization of other rapid prototyping parameters to accommodate the aforesaid hot and cold regions to achieve a more robust part, when compared to a typical SLS build with uncharacterized temperature gradients.

With the above thermal analyses and other optimized build parameters, placement of production parts within the parts bed of the rapid prototyping machine can be optimized. More specifically and with reference to Figures 3 and 5, the step of fabrication of a nested build as described at setup 58 of Figure 3 produces production parts 94 and iterative improvement specimens 96. Dimensional and mechanical testing at step 60 produces, among other things, deviations between input dimensions and output dimensions. The parameter optimization 48 takes into account, among other things, the deviations produced by the dimensional mechanical testing 60. Further, the parameter optimization step 48 takes into account thermal analyses as indicated at step 52. With the above knowledge, it becomes apparent that the deviations between input dimensions and output dimensions are not constant within the three-dimensional space of the parts bed 98. For example, deviations near the wall of the parts bed 98 or any cold spot per the thermal analyses at step 52 (Figure 3) may produce much greater deviations when compared to a central location within the parts bed 98. To that end, the parameter optimization 48 encompasses an optimized layout within the three-dimensional space of the parts bed 98 of a rapid prototyping machine. An optimized layout can take into account, among other things, larger or smaller deviations between input and output dimensions that may otherwise be consistent with three-dimensional locations within the parts bed 98.

The material characteristics of the selective laser sintering material of the present invention generally include material information and mechanical properties. The material information is derived from known values, empirically derived value, and computed values. The known values of the material such as melting point, density, and tensile stress are well known in the art or easily obtained from well known reference materials.

The known values for the selected sinterable material are readily obtainable from known reference materials. The optimization process of the present invention further derives additional empirical results and compares the empirical results to the known results. Referring to Figure 3, the step of dimensional and mechanical testing 60 encompasses analysis of the production parts and iterative improvement specimens. The analysis entails a visual and dimensional inspection of the production parts and the iterative improvement specimens to determine their dimensions and ultimate deviations from the production part architecture 42. Further analysis includes destructive testing, which entails various forms of mechanical testing, manual manipulation, and the like. The values of the material characteristics obtained through mechanical testing include, but are not limited to, tensile stress, ultimate tensile stress, elongation, modulus of elasticity, and density.

The above material characteristics are compared to the known values and compared to previous material characteristics achieved during previous build runs and ultimately compared to the production part architecture 42 which includes desired material characteristics. Computed values are additionally obtained by mathematical operations or the like with known values and/or empirical values. The relative deviations from the requisite material characteristics in the production part architecture 42 are analyzed at the parameter optimization step 48 to improve the quality of the production parts of subsequent production runs.

The optimization process of the present invention produces production parts far superior to parts produced from prior rapid prototyping machines and processes. Further, many rapid prototyping machines can be used to produce a large quantity of production parts. In addition, many rapid prototyping machines and the optimization process of the present invention can be included in a just-in-time inventory system. With reference to Figure 3, for example, demand for a part in a just-in-time inventory system would be accompanied by the production part architecture 42. The fabrication of a nested build ultimately produces the needed part and it is delivered to the predetermined point in the assembly process. Implementation of the above process allows for reduction in inventories on site, as production parts are readily available from the process 40 of optimizing production parts according to the present invention.

## Claims

1. A method for improving production parts (94), in particular aerospace production parts, produced from a rapid prototyping machine (70), wherein the rapid prototyping machine (70) makes use of a rapid prototyping material (74), a set of input data (42, 44) and an information set (50, 52, 54) having information pertaining to manufacturing factors involved in a previous build run of a production part, the method comprising:
executing a build run (58) that produces output components,
comparing said output components to said set of input data (42, 44) to produce a resultant data set, said resultant data set including deviations between said set of input data (42, 44) and said output components (94, 96),
incorporating said resultant data set into said information set, and
tailoring (48) said information set to reduce said deviations between said set of input data (42, 44) and said output components (94, 96) as compared to at least one previous build run,
**characterized in that** the output components include a combination of at least one production part (94) and at least one iterative improvement specimen (96), wherein said iterative improvement specimens (96) include one of Z-tensile arrays, density cubes, dimensional pyramids, flexural samples, and combinations thereof, and wherein the at least one production part and the at least one iterative improvement specimen are compared to said set of input data to produce the resultant data set.

2. The method of claim 1, wherein the step of comparing includes performing destructive testing (60) on said iterative improvement specimens (96).

3. The method of claim 1 or 2, wherein the rapid prototyping machine comprises a selective laser sintering machine (70), and the rapid prototyping material is a sinterable material (74).

4. The method of any of claims 1 to 3, further comprising the step of assigning locations for said production parts (94) and said iterative improvement specimens (96) in a parts bed (98), wherein said locations are optimized to reduce said deviations, as compared to said at least one previous build run.

5. The method of any of claims 1 to 4, wherein the at least one iterative improvement specimen (96) is a disposable part.

6. The method of any of claims 1 to 5, wherein a parts bed (22; 98; 102) is constructed of the same material (74) as said rapid prototyping material.

7. The method of any of claims 1 to 6, wherein said information set includes one of material characteristics (54) of said prototyping material (74), build parameters (50) of the prototyping machine (70), a thermal analysis (52) and combinations thereof, and wherein said information set is preferably derived from one of at least one previous build run, known values, computed values, and combinations thereof.

8. The method of claim 7, wherein said build parameters include variable parameters selected from a group consisting of stage height, left feed distance, left feed heater set point, minimum layer time, part heater set point, part heater inner/outer ratio, right feed distance, right feed heater set point, fill beam offset X, fill beam offset Y, outline beam offset X, outline beam offset Y, fill laser power, outline laser power, sorted fill maximum jump, and combinations thereof.

9. The method of claim 7 or 8, wherein the thermal analysis includes one of a thermal profile test of said parts bed (98), a thermal opacity test of said parts bed (98), and combinations thereof.

10. The method of any of claims 1 to 9, further comprising the steps of receiving a demand for said production parts, wherein the demand includes architecture readable by the prototyping machine.

## Patentansprüche

1. Verfahren zum Verbessern von Fertigungsteilen (94), insbesondere Fertigungsteilen der Luft- und Raumfahrt, die von einer Maschine zum schnellen Prototypenbau (70) hergestellt werden, wobei die Maschine zum schnellen Prototypenbau (70) von einem Material zum schnellen Prototypenbau (74), einem Satz Eingabedaten (42, 44) und einem Informationssatz (50, 52, 54) Gebrauch macht, der Informationen zu Herstellfaktoren enthält, die in einen vorangegangenen Produktionslauf eines Fertigungsteils involviert sind, wobei das Verfahren umfasst:
Durchführen eines Produktionslaufs (58), der Ausgabekomponenten erzeugt,
Vergleichen der Ausgabekomponenten mit dem Satz Eingabedaten (42, 44) zum Erzeugen eines resultierenden Datensatzes, wobei der resultierende Datensatz Abweichungen zwischen dem Satz Eingabedaten (42, 44) und den Ausgabekomponenten (94, 96) enthält,
Integrieren des resultierenden Datensatzes in den Informationssatz und
Anpassen (48) des Informationssatzes zum Verringern der Abweichungen zwischen dem Satz Eingabedaten (42, 44) und den Ausgabekomponenten (94, 96) im Vergleich zu mindestens einem vorangegangenen Produktionslauf,
**dadurch gekennzeichnet, dass** die Ausgangskomponenten eine Kombination mindestens eines Fertigungsteils (94) mit mindestens einem iterativen Verbesserungsprüfkörper (96) beinhalten, wobei die iterativen Verbesserungsprüfkörper (96) Z-Dehnungsanordnungen, Dichtewürfel, Dimensionspyramiden, Biegeproben oder Kombinationen hiervon beinhalten und wobei der mindestens eine Fertigungsteil und der mindestens eine iterative Verbesserungsprüfkörper mit dem Satz Eingabedaten verglichen werden, um den resultierenden Datensatz zu erzeugen.

2. Verfahren nach Anspruch 1, wobei der Schritt des Vergleichens die Durchführung eines zerstörenden Prüfverfahrens (60) an den iterativen Verbesserungsprüfkörpern (96) beinhaltet.

3. Verfahren nach Anspruch 1 oder 2, wobei die Maschine zum schnellen Prototypenbau eine Maschine zum selektiven Lasersintern (70) umfasst und das Material zum schnellen Prototypenbau ein sinterfähiges Material (74) ist.

4. Verfahren nach irgendeinem der Ansprüche 1 bis 3, das ferner den Schritt des Zuweisens von Orten für die Fertigungsteile (94) und die iterativen Verbesserungsprüfkörper (96) in einem Teilebett (98) umfasst, wobei die Orte optimiert werden, um die Abweichungen im Vergleich zu dem mindestens einen vorangegangenen Produktionslauf zu verringern.

5. Verfahren nach irgendeinem der Ansprüche 1 bis 4, wobei der mindestens eine iterative Verbesserungsprüfkörper (96) ein Einwegteil ist.

6. Verfahren nach irgendeinem der Ansprüche 1 bis 5, wobei ein Teilebett (22; 98; 102) aus demselben Material (74) wie das Material zum schnellen Prototypenbau errichtet wird.

7. Verfahren nach irgendeinem der Ansprüche 1 bis 6, wobei der Informationssatz Materialkennwerte (54) des Prototypenbaumaterials (74), Produktionsparameter (50) der Prototypenbaumaschine (70), eine Thermoanalyse (52) und Kombinationen hiervon beinhaltet, und wobei der Informationssatz vorzugsweise aus mindestens einem vorangegangenen Produktionslauf, aus bekannten Werten, errechneten Werten und Kombinationen hiervon abgeleitet wird.

8. Verfahren nach Anspruch 7, wobei die Produktionsparameter variable Parameter beinhalten, die ausgewählt sind aus einer Gruppe bestehend aus Abschnittshöhe, linkem Zufuhrabstand, Sollwert des linken Zufuhrerwärmers, Mindestschichtzeit, Sollwert des Teileerwärmers, Innen-/Außenverhältnis des Teileerwärmers, rechtem Zufuhrabstand, Sollwert des rechten Zufuhrerwärmers, Füllstrahlversatz X, Füllstrahlversatz Y, Konturstrahlversatz X, Konturstrahlversatz Y, Fülllaserleistung, Konturlaserleistung, Maximalsprung des sortierten Füllvorgangs und Kombinationen hiervon.

9. Verfahren nach Anspruch 7 oder 8, wobei die Thermoanalyse einen Wärmeprofiltest des Teilebetts (98), einen Wärmeundurchlässigkeitstest des Teilebetts (98) und Kombinationen hiervon beinhaltet.

10. Verfahren nach irgendeinem der Ansprüche 1 bis 9, das ferner die Schritte des Empfangens einer Nachfrage nach den Fertigungsteilen umfasst, wobei die Nachfrage eine Architektur beinhaltet, die von der Prototypenbaumaschine gelesen werden kann.

## Revendications

1. Procédé pour améliorer les pièces de production (94), en particulier des pièces de production aérospatiales, produites par une machine de prototypage rapide (70), où la machine de prototypage rapide (70) utilise un matériau de prototypage rapide (74), un ensemble de données d'entrée (42, 44) et un ensemble d'informations (50, 52, 54) ayant des informations se rapportant à des facteurs de fabrication impliqués dans une passe de construction précédente d'une pièce de production, le procédé comprenant les étapes consistant à :
exécuter une passe de construction (58) qui produit des composants de sortie,
comparer lesdits composants de sortie avec ledit ensemble de données d'entrée (42, 44) pour produire un ensemble de données qui en résulte, ledit ensemble de données qui en résulte présentant des écarts entre ledit ensemble de données d'entrée (42, 44) et lesdits composants de sortie (94, 96),
incorporer ledit ensemble de données qui en résulte dans ledit ensemble d'informations, et
façonner (48) ledit ensemble d'informations pour réduire lesdits écarts entre ledit ensemble de données d'entrée (42, 44) et lesdits composants de sortie (94, 96) en comparaison avec au moins une passe de construction précédente,
**caractérisé en ce que** les composants de sortie comprennent une combinaison d'au moins une pièce de production (94) et d'au moins un spécimen perfectionné itératif (96), où lesdits spécimens perfectionnés itératifs (96) comprennent l'un parmi des groupements de traction Z, des cubes de densité, des pyramides dimensionnelles, des échantillons de flexion et des combinaisons de ceux-ci, et où l'au moins une pièce de production et l'au moins un spécimen perfectionné itératif sont comparés avec ledit ensemble de données d'entrée pour produire l'ensemble de données qui en résulte.

2. Procédé selon la revendication 1, où l'étape de comparaison comprend l'exécution d'un test de destruction (60) sur lesdits spécimens perfectionnés itératifs (96).

3. Procédé selon la revendication 1 ou 2, où la machine de prototypage rapide comprend une machine de frittage laser sélective (70), et le matériau de prototypage rapide est un matériau apte à être fritté (74).

4. Procédé selon l'une quelconque des revendications 1 à 3, comprenant en outre l'étape consistant à attribuer des emplacements auxdites pièces de production (94) et auxdits spécimens perfectionnés itératifs (96) dans un lit de pièces (98), où lesdits emplacements sont optimisés pour réduire lesdits écarts, en comparaison avec ladite au moins une passe de construction précédente.

5. Procédé selon l'une quelconque des revendications 1 à 4, où l'au moins un spécimen perfectionné itératif (96) est une pièce jetable.

6. Procédé selon l'une quelconque des revendications 1 à 5, où un lit de pièces (22 ; 98 ; 102) est réalisé dans le même matériau (74) que ledit matériau de prototypage rapide.

7. Procédé selon l'une quelconque des revendications 1 à 6, où ledit ensemble d'informations comprend l'un parmi des caractéristiques de matériau (54) dudit matériau de prototypage (74), des paramètres de construction (50) de la machine de prototypage (70), une analyse thermique (52) et des combinaisons de ceux-ci, et où ledit ensemble d'informations est de préférence dérivé d'un parmi au moins une passe de construction précédente, des valeurs connues, des valeurs calculées et des combinaisons de celles-ci.

8. Procédé selon la revendication 7, où lesdits paramètres de construction comprennent des paramètres variables sélectionnés dans un groupe constitué de la hauteur d'étage, de la distance d'alimentation gauche, du point de réglage du chauffage d'amenée gauche, du temps de couche minimale, du point de réglage de chauffage de pièce, du rapport intérieur/extérieur de chauffage de pièce, de la distance d'alimentation droite, du point de réglage de chauffage d'amenée droit, du décalage de longeron de remplissage X, du décalage de longeron de remplissage Y, du décalage de longeron de contour X, du décalage de longeron de contour Y, de la puissance laser de remplissage, de la puissance laser de contour, du saut maximal de remplissage trié et des combinaisons de ceux-ci.

9. Procédé selon la revendication 7 ou 8, où l'analyse thermique comprend l'un parmi un test de profil thermique dudit lit de pièces (98), un test d'opacité thermique dudit lit de pièces (98) et des combinaisons de ceux-ci.

10. Procédé selon l'une quelconque des revendications 1 à 9, comprenant en outre les étapes consistant à recevoir une demande desdites pièces de production, où la demande comprend l'architecture lisible par la machine de prototypage.
